**Europäisches Patentamt**

**European Patent Office**

**Office européen des brevets**

(19)

(11) Veröffentlichungsnummer: **0 260 506 B1**

(12) **EUROPÄISCHE PATENTSCHRIFT**

(45) Veröffentlichungstag der Patentschrift: **12.12.90**

(51) Int. Cl.⁵: **B29B 9/06, B29B 13/04**

(21) Anmeldenummer: **87112622.3**

(22) Anmeldetag: **29.08.87**

(54) Kühlvorrichtung für Kunststoffgranulat.

(30) Priorität: **15.09.86 DE 3631376**

(43) Veröffentlichungstag der Anmeldung:
**23.03.88 Patentblatt 88/12**

(45) Bekanntmachung des Hinweises auf die Patenterteilung:
**12.12.90 Patentblatt 90/50**

(84) Benannte Vertragsstaaten:
**BE DE ES FR GB IT NL**

(56) Entgegenhaltungen:
**CH-A- 381 414**
**DE-A- 1 679 809**
**US-A- 3 843 060**

(73) Patentinhaber: **Werner & Pfleiderer GmbH,
Theodorstrasse 10 Postfach 30 12 20,
D-7000 Stuttgart 30(DE)**

(72) Erfinder: **Rudolph, Joachim, Ing.grad., Keltenstrasse 46,
D-7252 Weil der Stadt(DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

EP 0 260 506 B1

## Beschreibung

Die Erfindung betrifft eine Kühlvorrichtung für Kunststoffgranulat nach dem Oberbegriff des Patentanspruches 1, (DE-A 2 045 801).

Beim Granulieren von schmelzflüssigen in einem Extruder aufbereiteten Kunststoffmassen werden die an einer Düsenplatte austretenden Kunststoffstränge im Luftstrom oder in einem Wassernebel zu Granulat geschnitten. Durch die auf die Granulate übertragene Schneidenergie werden diese zum Zwecke der Kühlung und des Abtransportes in ein Wasserbad geschleudert, das die Granulatgeschwindigkeit auf die hierin gegebene Fließgeschwindigkeit reduziert. Aufschwimmendes Granulat, d.h. solches geringer Dichte, das sich an der Wasseroberfläche sammelt, verursacht hierbei leicht eine Klumpenbildung, vor allem bei Kunststoffen hoher Klebrigkeit. Bei Kunststoffprodukten hoher Dichte kommt es z.B. leicht zu Ansammlungen und damit zu einer Agglomeratbildung im Transportwassersystem.

Die Verweilzeit und damit die auf die einzelnen Granulate einwirkende Kühldauer ist daher nicht nur von der Fließgeschwindigkeit des Transportwassers abhängig, sondern auch von der Dichte des einzelnen Kunststoffproduktes.

Zur Vermeidung von Produktanbackungen und zur Erzielung einer optimalen Granulattemperatur benötigt außerdem jedes Kunststoffprodukt eine andere Verweilzeit im Wasser, die bei einem üblicherweise fest installiertem Rohrleitungssystem und der hierdurch vorgegebenen Wassermenge zwar über dessen Fließgeschwindigkeit beeinflußbar ist, jedoch bezogen auf die Gesamtmenge des Granulats nicht ausreichend bestimmbar ist, weil die über eine Förderpumpe erfolgende Wassereinspeisung in das Transportwasser verursachte Druckströmung Turbulenz verursacht.

Aus der DE-A 20 45 801 ist beispielsweise ein Verfahren und eine Vorrichtung zur Herstellung von trockenem Granulat aus Kunststoffen bekannt, bei welchen das Granulat mit dem Kühlmittel in einer Rohrleitung geführt wird und der Grad des Wärmeentzugs durch Unterbrechung der Kühlstrecke bzw. wahlweise Änderung der Kühlstreckenlänge variierbar ist. Bei der hierdurch erreichten Verweilzeitänderung wird in erster Linie die im Granulat verbleibende Restwärme zu dessen Selbsttrocknung ausgenützt, die Führung des Granulats im Kühlmittel bleibt jedoch hierdurch unbeeinflusst.

Der Erfindung liegt die Aufgabe zugrunde, die Kühlvorrichtung so auszugestalten, daß bei zur Verklebung im Kühlmittel neigender Kunststoffe bezogen auf die Gesamtmenge des zu kühlenden Granulats eine definierte und stufenlos einstellbare Verweildauer erreicht ist.

Diese Aufgabe wird nach dem Kennzeichen des Anspruches 1 gelöst. Durch die Ausbildung der Rohrleitung in nahezu ihrer Gesamtlänge mit einem vertikal angeordneten Steigrohr und mit dieser gegenüber vergrößertem Durchtrittsquerschnitt sowie dessen austrittsseitige Verbindung mit einer als Vakuumpumpe wirksamen Förderpumpe wird eine Kühlzone geschaffen, in die die Granulate durch eine Saugströmung geführt transportiert werden. Im Gegensatz zu einer Druckströmung werden die Granulate hierbei sofort bei Eintritt in den Kühlwasserstrom mit dem Kühlwasser in das Rohrleitungssystem gezogen und in ihrer Fließrichtung nicht abgelenkt, sodaß eine definierte Verweilzeit erreicht ist und bei einer Vielzahl von zu Verklebungen neigender Kunststoffe Agglomeratbildungen vermieden werden. Die Rohrleitung selbst bleibt hierbei auf den aus räumlichen Gründen erforderlichen Zuführungsabschnitt zwischen der Schnittstelle für das Granulat und dem eintrittsseitigen Bereich des Steigrohres begrenzt.

Durch regelbare Luftzugabe an der Saugseite der Förderpumpe ist die Fließgeschwindigkeit des Kühlmittels im Steigrohr stufenlos einstellbar, sodaß die Verweilzeit des Granulats in der Kühlzone abhängig von der Dichte des Kunststoffprodukts in freiwählbaren Bereichen auf einfache Weise verändert werden kann. Bei Kunststoffen hoher Dichte, bei denen das Granulat nicht aufschwimmt, ist durch gezielte Drosselung der Falschluftzufuhr eine hohe Fließgeschwindigkeit in der Kühlzone erreichbar im Gegensatz zu Kunststoffen niedriger Dichte, deren Granulat bereits durch Auftrieb beschleunigt wird, wobei die Fließgeschwindigkeit des Kühlmittels durch erhöhte Falschluftzufuhr über das Saugrohr gedrosselt werden kann.

Die Kühlvorrichtung ist daher vorteilhaft dort anwendbar, wo häufige Produktumstellungen erforderlich sind.

Ein den Erfordernissen des jeweils zu verarbeitenden Produktes anpassbarer Durchtrittsquerschnitt des Steigrohres ist nach den Merkmalen des Anspruches 2 erreicht.

In der Mehrzahl der Anwendungsfälle kann der Durchtrittsquerschnitt des Steigrohres einer Ausbildung nach dem Merkmal des Anspruches 3 entsprechen, womit ein optimales Fließverhalten des Granulates in der Mehrzahl der Anwendungsfälle erreicht ist.

In einer Ausbildung der Kühlvorrichtung nach den Merkmalen des Anspruches 4 kann die Gesamtlänge der Kühlstrecke zur Vermeidung von Verklebungen von Granulaten die eine lange Verweildauer erfordern, variabel gestaltet und in räumlich begrenzter Ausdehnung ohne Austausch der Förderpumpe deren Förderleistung angeglichen werden. Die Steigrohre bleiben hierbei auf eine max. mögliche Förderhöhe begrenzt.

In einer weiteren Ausbildung nach den Merkmalen des Anspruches 5 ist erreicht, daß bei zugeordneter Aufteilung der Kühlwasserrückführung im Schnittbereich der Schneideinrichtung eine Benetzung der Granulatoberfläche durch Wassernebel und eine regelbare Wasserzuführung für die Restwassermenge erfolgen kann, wobei durch die drucklose Zugabe der Restwassermenge unkontrollierte Verwirbelungen im Eintrittsbereich des Kühlwassers vermieden werden.

Eine weitere Ausbildung der Kühlvorrichtung nach den Merkmalen des Anspruches 6 vermindert die Anfahrzeit der Kühlvorrichtung durch sofortige Bereitstellung der vollen Pumpen-Saugleistung zur beschleunigten Führung des Granulatstromes in die Kühlstrecke während der Anfahrphase.

In einer Ausbildung nach den Merkmalen des Anspruches 7 ist eine den Anforderungen an das Kühlmittel in besonderer Weise gerecht werdende Ausgestaltung der Kühlvorrichtung aufgezeigt.

Die Erfindung wird nachfolgend an Hand eines in der Zeichnung dargestellten Ausführungsbeispiels näher erläutert.

Hierbei zeigen

Fig. 1 eine Kühlvorrichtung für Kunststoffgranulat in schematischer Darstellung

Fig. 2 und Fig. 3 eine weitere Ausbildung der Kühlvorrichtung mit in mehreren Steigrohren unterschiedlicher Produktführung.

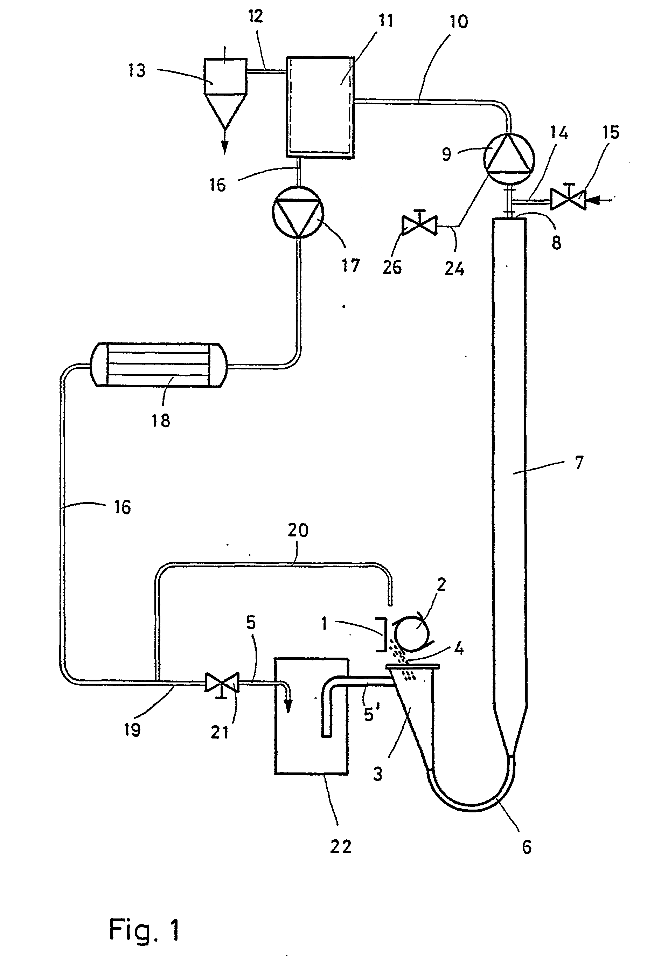

Bei der in Fig. 1 gezeigten Kühlvorrichtung ist unterhalb einer Düsenplatte 1 und der ihr zugeordneten Schneideinrichtung 2 ein Auffangbehälter 3 für das abgeschnittene Granulat 4 befestigt, in den über eine Zuleitung 5 der für den Transport des Granulats erforderliche Kühlwasserstrom eingespeist wird. Wie nachfolgend des näheren noch erläutert wird, erfolgt die Einspeisung der Gesamtmenge des Kühlwassers im Bereich der Schneideinrichtung an getrennter Stelle über zwei unterschiedliche Kühlströme. Das zu granulierende Kunststoffprodukt wird in einem mit der Düsenplatte 1 verbundenen in der Zeichnung nicht näher dargestellten Extruder aufbereitet und über diesen der Düsenplatte 1 förderwirksam zugeführt.

Mit dem Auffangbehälter 3 ist über eine Rohrleitung 6 ein Steigrohr 7 verbunden an dessen austrittsseitigem Ende 8 eine als Vakuumpumpe wirksame Förderpumpe 9 angeflanscht ist. Dabei ist die Saugseite der Förderpumpe 9 dem Steigrohr 7 zugeordnet, während deren Druckseite über eine weitere Rohrleitung 10 mit einem Granulat-Wasser-Abscheider 11 in Verbindung steht. Das im Granulat-Wasser-Abscheider 11 vom Kühlwasser getrennte Granulat gelangt anschließend über eine Zuleitung 12 in einen Trockner 13, in dem das Granulat abschließend von noch anhaftender Oberflächenfeuchte befreit wird. Um bereits beim Anfahren der Förderpumpe 9 deren volle Saugleistung zu erzielen, ist diese mit einer kurzfristig über ein Absperrventil 26 zuschaltbaren Frischwasserzuführung 24 verbunden.

Zur Regelung der Fördergeschwindigkeit des Kühlwassers im Steigrohr ist dessen austrittsseitiges Ende zugleich mit einem Saugrohr 14 verbunden, durch welches Falschluft vor Eintritt des mit Granulat befrachteten Kühlwassers in die Förderpumpe 9 in regelbarer Menge in das Kühlwasser eingezogen wird.

Die Regelung der Saugluft und damit die gezielte Änderung der Saugleistung der Förderpumpe 9 erfolgt über ein im Saugrohr 14 angeordnetes Regelventil 15, über das die Fördergeschwindigkeit des Kühlwassers und damit die Kühldauer des transportierten Granulats stufenlos eingestellt werden kann. Dabei ist die für das jeweilige Produkt erforderliche Fördergeschwindigkeit im Steigrohr 7 abhängig von der Beschaffenheit des ausgetragenen Granulats empirisch leicht ermittelbar. Es hat sich gezeigt, daß bei stark klebefreudigem Granulat wie z.B. Polyurethan (P u R),das im Steigrohr 7 nicht aufschwimmt, bei einer relativen Granulatgeschwindigkeit von ca. 10 m/min ein von Zusammenballungen befreites Granulat erzielbar ist. Durch die "saugende" Förderung der Förderpumpe 9 und die damit erzielte weitgehend turbulenzfreie Strömung im Steigrohr 7 werden die Granulate gleichmäßig durch das Steigrohr 7 geführt, sodaß eine difinierte Verweilzeit gegeben ist.

Als Vakuumpumpe wirksame Förderpumpe 9 kann jede zugleich ein Flüssigmedium und Partikel fördernde selbstansaugende Pumpe eingesetzt werden. Eine Förderpumpe dieser Art ist z.B. die unter dem Namen "Helivac" der Fa. Helivac Pumper A/S bekannt gewordene Vakuumpumpe.

Zur Einspeisung des Kühlwasserstromes in den Bereich der Schneideinrichtung 2 dient eine mit dem Granulat-Wasser-Abscheider 11 verbundene Rohrführung 16 über die das abgeschiedene Wasser mittels einer druckaufbauenden Förderpumpe 17 in den Bereich der Schneideinrichtung 2 geführt wird. Hierbei dient ein Wärmetauscher 18 zur Rückkühlung des Kühlwassers.

Durch Aufteilung der Gesamtmenge des Kühlwasserstromes über Zuleitungen 19 bzw. 20 erfolgt dessen getrennte Zuführung in den Bereich der Schneideinrichtung 2, wobei ein in der Zuleitung 19 angeordnetes Regelventil 21 eine in der Zuführungsmenge begrenzbare Aufteilung des Kühlwasserstromes ermöglicht. Dabei dient der in der Zuleitung 20 mittels Förderpumpe 17 bei entsprechender Drosselung des Regelventils 21 sich aufbauende Druck zur Einspeisung eines Wassernebels oberhalb der Schneideinrichtung 2. Die hierfür erforderliche Kühlwassermenge bleibt hierbei auf max. 20 % der Gesamtmenge des Kühlwasserstromes begrenzt. Die restliche Kühlwassermenge wird in einen Vorratsbehälter 22 eingebracht, der so angebracht ist, daß sein Wasserspiegel der Höhe des für den Auffangbehälter 3 direkt unterhalb der Schneideinrichtung vorgesehenen Wasserspiegels entspricht. Der Kühlwasserzulauf in den Auffangbehälter 3 erfolgt somit drucklos und daher verwirbelungsfrei in den Auffangbehälter 3 durch die Zuleitung 5'.

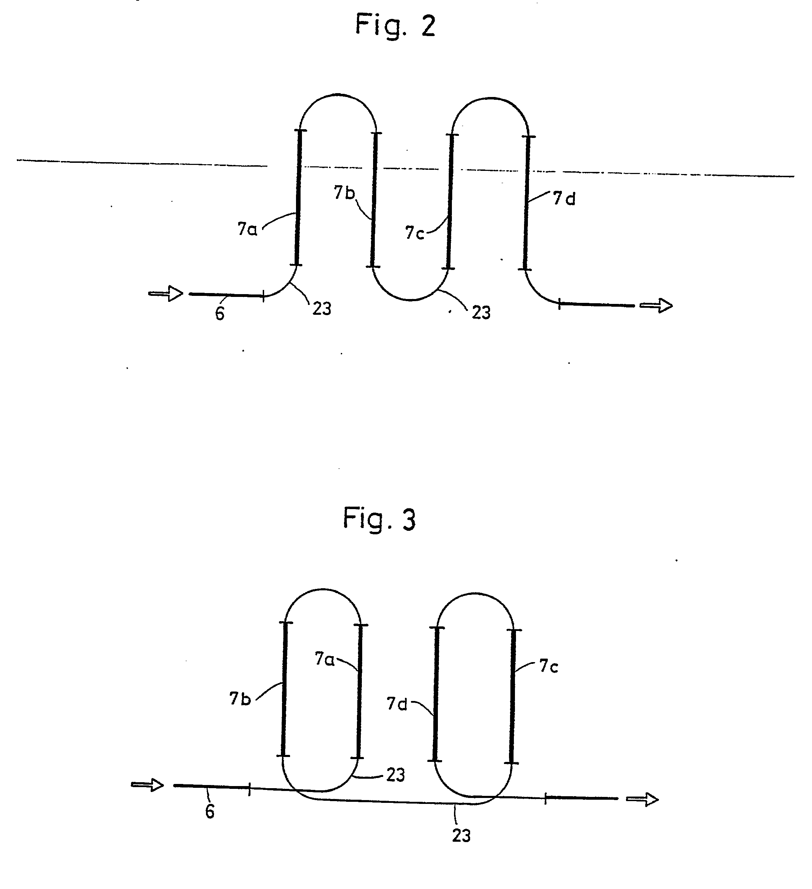

In den Fig. 2 und 3 sind weitere Ausbildungen der Kühlvorrichtung gezeigt, bei denen die Kühlstrecke durch eine mehrfache Anordnung von vertikalen Steigrohren gebildet ist. Eine solche Anordnung ist dann vorteilhaft, wenn bestimmte Kunststoffe eine besonders hohe Verweilzeit des Granulats im Kühlwasser erfordern

Hierbei sind Steigrohre 7a und 7c parallel zueinander und mit in gleicher Höhe sich befindlichen ein- und austrittsseitigen Anschlüssen angeordnet. Die Anschlüsse sind jeweils durch die Rohrleitung 6 ergänzende flexible Verbindungsleitungen 23 in Reihe mit Fallrohren 7b, 7d, nacheinander oder mit diesen wechselseitig verbindbar. Eine solche wechselseitige Verbindung ist in Fig. 3 schematisch aufgezeigt. Sie gelangt insbesondere bei in Kühlwasser aufschwimmendem Granulat mit geforderter extrem langer Kühldauer zur Anwendung, wie dies beispielsweise bei Polypropylen der Fall ist.

Hiernach gelangt das Granulat zunächst in ein erstes Steigrohr 7a mit beispielsweise 100 mm lichtem Durchmesser und danach in ein Steigrohr 7c mit 150 mm lichtem Durchmesser, wobei beide Steigrohre 7a und 7c aus- bzw. eintrittsseitig jeweils mit Fallrohren 7b bzw. 7d mit jeweils kleinerem lichtem Durchmesser verbunden sind. So weist das Fallrohr 7b im gezeigten Beispiel einen lichten Durchmesser von 50 mm, das Fallrohr 7d einen solchen von 75 mm auf. Durch diese Anordnung eines in Strömungsrichtung insgesamt zunehmenden Durchtrittsquerschnittes verringert sich die Strömungsgeschwindigkeit des Kühlwassers, wogegen die Verweildauer des Granulates bei zunehmender Abkühlung und damit geringer werdender Verklebungsneigung der Granulate entsprechend zunimmt. Die Fallrohre 7b und 7d besitzen vergleichsweise geringere Durchtrittsquerschnitte, sodaß aufschwimmendes Granulat mit einer gegenüber den Steigrohren 7a und 7c erhöhten der Auftriebskraft entgegengerichteten Strömungsgeschwindigkeit befördert wird.

Eine aufeinanderfolgende Verbindung der Steigrohre 7a und 7c mit den Fallrohren 7b und 7d zeigt Fig. 2 in einer Anwendung für nicht aufschwimmendes Granulat, wie für z.B. bestimmte Gruppen von Polyurethanen. Hierbei erfolgt im Gegensatz zur Produktführung nach Fig. 3 die Produktführung in Steigrohren 7a und 7c mit gegenüber den Fallrohren 7b und 7d verringertem Durchtrittsquerschnitt. Wie ein Vergleich der Fig. 2 und 3 zeigt, bedarf es hierzu lediglich eines Austausches der unteren Anschlüsse der Steig- bzw. Fallrohre.

Im übrigen ist auch hier der Durchtrittsquerschnitt der Steig- bzw. Fallrohre in Strömungsrichtung zunehmend.

Die in Fig. 2 und 3 gezeigten Ausbildungen sind Ausgestaltungen bei denen neben einer Feinregulierung der Verweildauer des Granulats im Kühlwasserstrom durch die regelbare Saugleistung der Förderpumpe 9 neben einer grundsätzlich erhöhten Verweildauer des Granulats eine produktbezogene Führung erreicht ist.

## Patentansprüche

1. Kühlvorrichtung für Kunststoffgranulat, das durch Abtrennen der aus einer Düsenplatte eines Extruders austretenden Kunststoffstränge gebildet und in noch plastischem Zustand einem an die Düsenplatte im Bereich einer Schneideinrichtung angrenzenden Kühlwasserstrom zugeführt und mit diesem über eine Rohrleitung in einen Granulat-Wasser-Abscheider eingebracht wird, dadurch gekennzeichnet, daß die Rohrleitung (6) überwiegend als vertikal angeordnetes Steigrohr (7) mit dieser gegenüber vergrößertem Durchtrittsquerschnitt ausgebildet ist, dessen oberes austrittsseitiges Ende mit der Saugseite einer als Vakuumpumpe wirksamen Förderpumpe (9) und einem über ein Regelventil (15) steuerbaren ins Freie führenden Saugrohr (14) verbunden ist, und daß die Druckseite der Förderpumpe (9) mit dem Granulat-Wasser-Abscheider (11) in Verbindung steht.

2. Kühlvorrichtung nach Anspruch 1, dadurch gekennzeichnet, daß das Steigrohr (7) über seine gesamtlänge einen gleichbleibenden Durchtrittsquerschnitt aufweist, der gegenüber dem Durchtrittsquerschnitt der Rohrleitung (6) das 1,2 - bis 4,5-fache beträgt.

3. Kühlvorrichtung nach den Ansprüchen 1 und 2, dadurch gekennzeichnet, daß das Steigrohr (7) vorzugsweise einen 2,5-fachen Durchtrittsquerschnitt aufweist.

4. Kühlvorrichtung für an der Düsenplatte eines Extruders geschnittenes Kunststoffgranulat mit einem an eine Schneideinrichtung angrenzenden einen Kühlwasserstrom führenden Auffangbehälter für das Granulat, von dem eine Rohrleitung zu einem Granulat-Wasser-Abscheider führt, dadurch gekennzeichnet, daß die Rohrleitung (6) in mehrere in Reihe hintereinander angeordnete vertikale Steigrohre (7a, 7c) einmündet, die einzeln unterschiedliche in Strömungsrichtung zunehmende Durchtrittsquerschnitte aufweisen, mit der Saugseite einer als Vakuumpumpe wirksamen Förderpumpe (9) und einem über ein Regelventil (15) steuerbaren ins Freie führenden Saugrohr (14) verbunden sind, wobei die Druckseite der Förderpumpe (9) mit dem Granulat-Wasser-Abscheider (11) in Verbindung steht, und daß die Steigrohre (7a, 7c) aus- und eintrittsseitig in Aufeinanderfolge mit vertikal angeordneten Fallrohren (7b, 7d) mit einzeln unterschiedlichen in Strömungsrichtung zunehmenden Durchtrittsquerschnitten verbunden sind.

5. Kühlvorrichtung nach den Ansprüchen 1 bis 3 oder 4 mit einer Kühlwasserrückführung vom Granulat-Wasser-Abscheider zu einem unterhalb der Düsenplatte angeordneten Auffangbehälter mittels druckaufbauender Förderpumpe, dadurch gekennzeichnet, daß der Düsenplatte (1) eine oberhalb des Bereichs der Schneideinrichtung (2) einmündende mit der Kühlwasserrückführung verbundene Zuleitung (20) zugeordnet ist, in welcher die Kühlwassermenge bis auf max. 20 % der Gesamtmenge begrenzt ist und daß die restliche Kühlwassermenge über eine weitere unterhalb des Bereiches der Schneideinrichtung (2) angeordnete und mittels Regelventil (21) steuerbare Zuleitung (5, 5') zugeführt wird, die mit einem dem Niveau des Auffangbehälters (3) entsprechenden Wasservorratsbehälter (22) in Verbindung steht.

6. Kühlvorrichtung nach Anspruch 1 oder 4, dadurch gekennzeichnet, daß die Förderpumpe (9) saugseitig mit einer mittels Absperrventil (26) zuschaltbaren Frischwasserzuführung (24) verbunden ist.

7. Kühlvorrichtung nach Anspruch 5, dadurch gekennzeichnet, daß innerhalb der Kühlwasserrückführung in Strömungsrichtung aufeinanderfolgend die druckaufbauende Förderpumpe (17), ein Wärmetauscher (18) und ein Wasservorratsbehälter (22) angeordnet sind.

## Claims

1. Cooling device for synthetic material granulate which is formed by cutting-off of the synthetic material strands issuing from a nozzle plate of an extruder and fed in still plastic state to a cooling water stream adjoining the nozzle plate in the region of a cutting equipment and introduced with this cooling water stream by way of a tube duct into a granulate-water separator, characterised thereby, that the pipe duct (6) is constructed predominantly as vertically arranged riser pipe (7), which has a passage cross-section increased by comparison therewith and the upper exit end of which is connected with the suction side of a conveying pump (9) effective as vacuum pump and with a suction pipe (14) leading into the open under the control of a regulating valve (15), and that the pressure side of the conveying pump (9) stands in connection with the granulate-water separator (11).

2. Cooling device according to claim 1, characterised thereby, that the riser pipe (7) displays a passage cross-section which remains constant over its entire length and amounts to 1.2 to 4.5 times the passage cross-section of the pipe duct (6).

3. Cooling device according to the claims 1 and 2, characterised thereby, that the riser pipe (7) preferably displays a passage cross-section which is 2.5 times as great.

4. Cooling device for synthetic material granulate cut at the nozzle plate of an extruder, with a collecting container for the granulate, which container adjoins a cutting equipment and conducts a cooling water stream and from which a pipe duct leads to a granulate-water separator, characterised thereby, that the pipe duct (6) opens into several vertical riser pipes (7a, 7c), which are arranged in series one behind the other and individually display different passage cross-sections increasing in flow direction and are connected with the suction side of a conveying pump (9) effective as vacuum pump and with a suction pipe (14) leading into the open under the control of a regulating valve (15), wherein the pressure side of the conveying pump (9) stands in connection with the granulate-water separator (11), and that the riser pipes (7a, 7c) are connected at the entry and the exit in sequence with vertically arranged down-pipes (7b, 7d) with individually different passage cross-sections increasing in flow direction.

5. Cooling device according to the claims 1 to 3 or 4 with a cooling water return feed from the granulate-water separator to a collecting container arranged underneath the nozzle plate by means of a conveying pump building up pressure, characterised thereby, that the nozzle plate (1) is associated feed duct (20), which is connected with the cooling water return feed and opens above the region of the cutting equipment (2) and in which the cooling water quantity is limited to a maximum of 20% of the total quantity and that the remaining cooling water quantity is fed by way of a feed duct (5, 5'), which is arranged underneath the region of the cutting equipment (2) and controllable by means of a regulating valve (21) and which stands in communication with a water supply container (22) corresponding to the level of the collecting container.

6. Cooling device according to claim 1 or 4, characterised thereby, that the conveying pump (9) is connected at the suction side with a fresh water feed (24) switchable by means of a shut-off valve.

7. Cooling device according to claim 5, characterised thereby, that the conveying pump (17) building up pressure, a heat exchanger (18) and a water supply container (22) are arranged one following the other in flow direction within the cooling water return feed.

## Revendications

1. Dispositif de refroidissement pour des granulés de matière plastique, qui sont formés par séparation des joncs de matière plastique sortant de la plaque de filière d'une extrudeuse et qui sont acheminés, à un état encore plastique, vers un courant d'eau de refroidissement voisin de la plaque de filière et dans la zone d'une installation de découpage et qui sont introduits avec cette eau de refroidissement par un conduit dans un séparateur des granulés et de l'eau, dispositif caractérisé en ce que le conduit tubulaire (6) est réalisé pour sa majeure partie sous forme d'un tube ascendant (7), monté vertical et ayant une section de passage plus grande par rapport à celle du conduit, l'extrémité supérieure, du côté sortie, de ce tube ascendant étant reliée au côté aspiration d'une pompe (9) de circulation, jouant le rôle d'une pompe à vide, et à un tube (14) d'aspiration conduisant à l'air libre et commandable à l'aide d'une soupape (15) de régulation, et en ce que le côté refoulement de la pompe (9) de circulation est relié au séparateur (11) des granulés d'avec l'eau.

2. Dispositif de refroidissement selon la revendication 1, caractérisé en ce que le tube ascendant (7) présente une section de passage qui demeure constante sur la totalité de sa longueur et qui représente 1,2 à 4,5 fois la section de passage du conduit tubulaire (6).

3. Dispositif de refroidissement selon les revendications 1 et 2, caractérisé en ce que le tube ascendant (7) présente une aire de section de passage qui représente avantageusement 2,5 fois (celle du conduit tubulaire).

4. Dispositif de refroidissement pour des granulés de matière plastique, découpés à la plaque de filière d'une extrudeuse, le dispositif comportant un récipient collecteur des granulés, voisin d'une installation de découpage et acheminant un courant d'eau de refroidissement pour les granulés, récipient à partir duquel un conduit tubulaire conduit à un séparateur des granulés d'avec l'eau, dispositif caractérisé en ce que le conduit tubulaire (6) débouche dans plusieurs tubes ascendants (7a, 7c) verticaux disposés en série l'un derrière l'autre, qui présentent chacun des aires de section de passage augmentant de façon différente dans le sens de l'écoulement, et sont reliés au côté aspiration d'une pompe (9) de circulation jouant le rôle de pompe à vide et à un tube (14) d'aspiration, conduisant à l'air libre et commandable à l'aide d'une soupape (15) de régulation, de sorte que le côté refoulement de la pompe (9) de circulation est en liaison avec le séparateur (11) des granulés et de l'eau, et en ce que les tubes ascendants (7a, 7c) sont en liaison, du côté de leur entrée et de leur sortie, successivement l'un après l'autre, avec des tubes descendants (7b, 7d), disposés verticalement et comportant chacun des aires de section de passage augmentant de façon différente dans le sens de l'écoulement.

5. Dispositif de refroidissement selon les revendications 1 à 3 ou 4, comportant un retour grâce à une pompe de circulation provoquant une augmentation de la pression, de l'eau de refroidissement circulant du séparateur granulés/eau vers un récipient collecteur disposé au-dessous de la plaque de filière, dispositif caractérisé en ce qu'à la plaque (1) de filière est associé un conduit (20) d'acheminement, relié au circuit de retour de l'eau de refroidissement et débouchant au-dessus de la zone de l'installation (2) de découpage, conduit dans lequel la quantité de l'eau de refroidissement est limitée de façon à n'atteindre que 20% au maximum de la quantité totale d'eau et en ce que la quantité restante de l'eau de refroidissement est acheminée par un autre conduit (5,5′), disposé au-dessous de la zone de l'installation (2) de découpage et réglable au moyen d'une soupape (21) de régulation, ce conduit étant en liaison avec un réservoir (22) d'eau dont le niveau d'eau correspond à celui du récipient (3) collecteur.

6. Dispositif de refroidissement selon la revendication 1 ou 4, caractérisé en ce que la pompe (9) de circulation est en liaison, du côté aspiration, avec une conduite (24) d'alimentation en eau fraîche pouvant être reliée au circuit par l'intermédiaire d'un robinet (26) d'isolement ou de mise en liaison.

7. Dispositif de refroidissement selon la revendication 5, caractérisé en ce qu'à l'intérieur du circuit de retour de l'eau de refroidissement sont disposés successivement, dans le sens de l'écoulement, la pompe (17) de circulation provoquant une montée en pression, un échangeur (18) de chaleur et un réservoir (22) d'eau.

EP 0 260 506 B1

Fig. 1

# Fig. 2

# Fig. 3